# EUROPEAN PATENT APPLICATION

(11) **EP 1 197 828 A1**
(43) Date of publication of application: **17.04.2002**
(21) Application number: 01306086.8
(22) Date of filing: 16.07.2001
(51) Int. Cl.: G06F 1/00, G06F 17/60, H04L 29/06

(54) **Remote printing of secure and/or authenticated documents**

(30) Priority: 11.10.2000 SG 200005827
(71) Applicant: Trustcopy Pte Ltd, Singapore 119631 (SG)
(72) Inventor: WU, Jian Kang, 06-63 Singapore 600051 (SG); ZHU, Qunying, 05-38, Singapore 650243 (SG); ZHU, Baoshi, 13-163 Singapore 130035 (SG); Huang, Sheng, 08-16,Singapore 600403 (SG)
(74) Representative: Tomlinson, Kerry John

(57) **Abstract**

A method for the remote printing of a document by use of a network, the method including receiving at a server the document as sent from a sender; the server forwarding the document to a recipient; the document being authenticated prior to being forwarded to the recipient; and the server receiving instructions from the sender regards printing controls and the server implementing those controls on the recipient. A hardware device to support the printing controls is also disclosed.

## Description

### Field of the Invention

This invention relates to a method and apparatus for the controlled printing of a secure and/or authenticated document and refers particularly, though not exclusively, to such a method and apparatus including controls over the printing process.

### Definitions

Throughout this specification a reference to a document is to be taken as including a document in electronic or printed form.

Throughout this specification references to authentication and its grammatical equivalents includes secure, and vice versa.

Throughout this specification references to a machine are to be taken as including a desktop computer, laptop computer, notebook computer, or any other suitable form of computer.

Throughout this specification "printing" is to be taken as including all forms of dealing with the document by the recipient, including: printing, viewing, listening, saving, sending electronically, forwarding, and like functions.

### Background to the Invention

Paper documents are normally used to conduct business, and for administrative purposes. Despite the predictions repeatedly made for the paperless office, the digital age has seen an increase in the use of paper within offices. The main reason for this is trust. When a document is properly signed by an authorized person, their signature provides its authenticity. Wherever or on whatever the signature appears, one can proceed with some degree of certainty that the document is genuine. With the number of original documents being strictly controlled, and known, security is achieved.

### Consideration of the Prior Art

US patent 6,091,507 relates to a method and apparatus for printing a document over a network. It deals with a network protocol, transmission format, and hardware interface facilitating high-speed transmission of raster data from a host computer having a raster image processor, to a printer. Clearly, it does not address a number of important issues that are relevant for a document that is secure, trusted or authenticated.

US patent 5,983,065 relates to a method of printing secure documents. It uses a controlled access electronic printing machine to print original documents The printed images formed thereby are recognizable in visible light, and arise from marking materials (liquid inks and/or dry toners) containing at least one photoactive (courmarin) compound. The original document images printed cannot be copied or scanned in a normal copier, or scanner. It uses special printing materials.

US patent 5,917,996 discloses a method to print a tamper-resistant form using tamper-resistant, composite electronic form characters, which overlay a security background.

US patent 6,085,181 is for a postage metering system for a stand-alone meter operating as a meter server on a network. Printer modules operate as client printer modules on the network coupled with a postal security device (PSD). The PSD includes unique identification, postal value storage and a digital signature generator.

The client printer requests evidence of postage payment from the PSD through the local client printer module for concluding postage metering transactions. The evidence of postage payment includes a digital signature corresponding to each request for evidence of postage payment. This patent addresses usage control for postage.

In the prior art there is no disclosure addressing two most important issues: the control of number of copies made of a document, and control of the authenticity of the document.

### Objects of the Invention

It is the principal object of the present invention to provide a method and apparatus for the remote printing of an authenticated document, the printing being able to be controlled.

### Summary of the Invention

With the above and other objects in mind, the present invention provides a method for the remote printing of a document by use of a network, the method including the steps of:
(a) receiving at a server the document as sent from a sender;
(b) the server forwarding the document to a recipient;
(c) the document being authenticated prior to being forwarded to the recipient; and
(d) the server receiving instructions from the sender regarding printing controls and the server implementing those controls at the recipient.

The present invention also provides a method for the remote printing a document by use of a network, the method including the steps of:
(a) a sender sending the document to a server to enable the server to forward the document to a recipient;
(b) the document being authenticated by the sender prior to sending it to the server; and
(c) sending to the server instructions for controlling the printing of the document to enable the server to implement those controls on the recipient.

In another form, the present invention provides a method for printing of an authenticated document received remotely by use of a network, the method including the steps of:
(a) a recipient receiving the authenticated document from a server, the server having received the authenticated document from a sender;
(b) the server providing implementation of printing controls on the recipient, the server having received the printing controls from the sender.

The printing controls preferably include ensuring that the document as printed has a content that is exactly the same as the document content as sent by the sender and/or anti-forgery controls and/or anti-copying controls and/or controls on a number of copies of the document that are to be printed.

The recipient may include a printer, the sender providing the printing controls to the printer for the printing of the document. The server preferably enables a secure document delivery from the sender through the server to the recipient, and may be a trusted agent to the sender in printing control. The server may also be a trusted third party for document verification. To do this the server may use hash and content feature of the document stored in the server. The secure document delivery and printing control may be based on a trusted document structure including one or more of:
a) the document itself;
b) a hand signature;
c) digital signature;
d) optical watermark;
e) content features of the document;
f) usage control and audit trail;
g) a seal of the sender; and
h) an expiry date.

The sender may be the one who authorises the document. The method may use a Public Key Infrastructure to provide non-repudiation, privacy and security in the delivery of the document.

The digital signature may be applied to the document, the digital signal being that of the sender, server and/or recipient. The sender and recipient are preferably registered with the server before sending and receiving respectively. A document hash and the content features can be sent with the document for validation and the hash and content feature of the document kept in the server for future verification.

The method may use a secure document transfer channel provided by Secure Socket Layer protocol, and authentication of the sender and the recipient may be by using user identity and at least one password.

The method may also use encryption techniques for secure document delivery. A key to decrypt the document can therefore be sent directly to the recipient by a carrier means selected from the group consisting of: email, telephone, mail, courier and personal delivery.

The printed document may be protected against unauthorised copying and forgeries using an authentication means selected from the group consisting of: optical watermark, special ink, special paper and special printing materials.

The optical watermark may have a counterfeit-proof layer. The printer may be calibrated to achieve a high level of performance of the counterfeit-proof layer. The calibration may be performed using printing language without manual intervention. Also, the printer may be secure in the printing control process; and may include a secure memory, a secure central processing unit, and a secure clock. The secure memory may be used to store a private key; the central processing unit may be used to prevent run-time attacks; and the secure clock can be used to keep time. Preferably, the printer and the server use a public key pair or symmetry key of the printer to perform secure handshaking to authenticate each other.

The server may send an encrypted document hash and optical watermark, and printing instructions, to the printer.

The printer may receive the document from client software, decrypt the document, and verify the document with a hash and time stamp before printing, and add the optical watermark during printing.

Preferably, the printer deletes the document immediately after printing; and an audit trail record is created in the server.

The recipient maybe trusted in the printing control process. In this case, the server may communicate with the printer through the client software to verify the printer serial number and internet protocol address, check the status of the printer, lock a control panel of the printer, set all necessary printer settings, send to the printer the document for printing, reset printer settings after the printing process is completed, and create an audit trail record in the server.

The seal may include one or more selected from the group consisting of: the hand signature and the seal; the seal including a common seal that is common to all printed copies, and a unique seal which is unique to each printed copy.

There may be included client software that has a basic part and a sensitive part, the sensitive part being more susceptible to attack than the basic part, the basic part being sent to the recipient when the recipient is registered with the server. The sensitive part is downloaded to the recipient's machine for the printing of the document and is deleted from the recipient's machine upon completion of the printing to protect the sensitive part from attack. An encrypted form of the sensitive part is preferably sent to the recipient when the recipient is registered with the server, the server managing the decryption key; the sensitive part being decrypted when and as required.

A hash result of the basic part may be taken at the same time as or before the basic part is sent to the recipient, the hash result being stored in the server: and when the recipient requires printing of the document a second hash result of the basic part is taken and compared with the hash result before printing is authorized by the server.

The client software may be stored in a hardware device of the recipient.

Alternatively or additionally, an execution time for the execution of components of the sensitive part may be recorded in the server, and compared with the time taken for the execution of the components during the printing of the documents; the printing being terminated if the time taken is significantly longer than the execution time.

Preferably, the printing controls are implemented in response to the recipient requesting the printing of the document. The printing control may be carried-out off-line, the server not participating in the printing process. In that case there may be provided a hardware device at the recipient to act on behalf of the server and/or a secure software program to implement the printing controls at the receiver. Preferably, the software program is implemented in a distributed manner to assist in preventing software attacks.

The sender and the server may be the same, in which case the server performs all functions of the sender.

The hardware device may be for controlling the printing of the document, the hardware device including a secure memory, a delete-after-read memory, a central processing unit with an on-chip program, and an interface; the hardware device being registered with the server. The machine may include the printer, the hardware device being integral with the printer; the printer being registered with the server.

The secure memory may have an accessible memory that can be accessed only when a password of a user is entered and verified, the access being only to a block of the accessible memory relevant for that user; and a controlled memory for internal use, the controlled memory being divided into a plurality of blocks one controlled memory block for each user; the controlled memory being for the storage of secret keys, serial numbers, user's private keys and the recipient's ID key.

The controls may include the issuing of a license for the recipient to print the document, the license including a number of copies of the document authorized for printing. Each license preferably has a license key, the license key being used to encrypt the unique seal; the license keys being sent to the recipient by the server in an encrypted form and being installed in the hardware device. The server may be able to add to the number of license keys, the server generating a new license key set and a new top-up key, the new license key set and the new top-up key being encrypted with the previous top-up key prior to being sent to the recipient by the server and being installed in the hardware device.

Each license may include an expiry date after which printing of the document using that license will no longer be possible. The new license key set may be sent separately from or together with the document.

Prior to the sender sending the document, the sender's common seal, a timestamp for sending, and the expiry date, may be encrypted with a first session key to give an encrypted result. The encrypted result and the document may then be encrypted with a second session key to give a second encrypted result; and a hash result included in the second encrypted result to provide a means for checking data integrity.

The print controls may be to view the document but not to print the document, a license not being required for viewing. The expiry date is preferably checked before printing of the document is authorized and, if the expiry date has passed, printing of the document is not allowed.

The sender may be an authority which issues a secure hardware device to each of a plurality of recipients, the document and license keys being sent to each of the recipients by a network, each recipient using the secure hardware device to print the document, the document being sent by the recipient to a customer of the recipient as a printed or electronic document, the secure hardware device controlling the sending of electronic documents, the secure hardware device creating an audit trail and sending it to the authority whenever new license keys are topped-up.

The document may be postage stamps, tax invoices and/or tax receipts, a value of each being included in the audit trail. The authority may determine a tax payable based on the values included in the audit trail.

In a further form, the present invention provides a hardware device for use with a user's machine to enable control of printing of at least one document by the machine, the hardware device including a secure memory, a delete-after-read memory, a central processing unit with an on-chip program, and an interface.

The secure memory may have an accessible memory that can be accessed only when a password of the user is entered and verified, the access being only to a block of the assessable memory relevant for the user; and a controlled memory divided into a plurality of blocks, there being one controlled memory block for each user. The controlled memory may be for the storage of secret keys, serial numbers, user's private keys, and the user's ID key. The hardware device may be implemented as a secure software program, and the secure software program may be implemented in a distributed manner to assist in preventing software attacks.

### Description of the Drawings

In order that the invention may be fully understood and readily put into practical effect there shall now be described by way of non-limitative example only preferred forms of the present invention, the description being with reference to the accompanying illustrative drawings in which:
Figure 1 is a block diagram of the document delivery and printing system.
Figure 2 depicts the structure of a trusted document.
Figure 3 is a flow diagram for controlling a printer using PJL language.
Figure 4 is a block diagram of a hardware device for off-line printing.
Figure 5 is a block diagram of a first off-line printing scheme;
Figure 6 is a document data format used in the scheme of Figure 5;
Figure 7 is a representation of the creation of top-up key sets;
Figure 8 is a flow diagram of the top up process of Figure 7;
Figure 9 is a block diagram of a second off-line printing scheme;
Figure 10 is a document data format used in the scheme of Figure 9;
Figure 11 is a license and license installer data format used in the scheme of Figures 9 and 10;
Figure 12 is a block diagram of a second hardware device for off-line printing;
Figure 13 is a block diagram of a third off-line printing scheme;
Figure 14 is a document data format used in the scheme of Figure 13;
Figure 15 is a representation of the creation of top-up key sets.
Figure 16 is a flow diagram of the top up process of Figure 15;
Figure 17 is a block diagram of a fourth off-line printing scheme;
Figure 18 is a document data format used in the scheme of Figure 17;
Figure 19 is a license and license installer data format used in the scheme of
Figures 17 and 18;

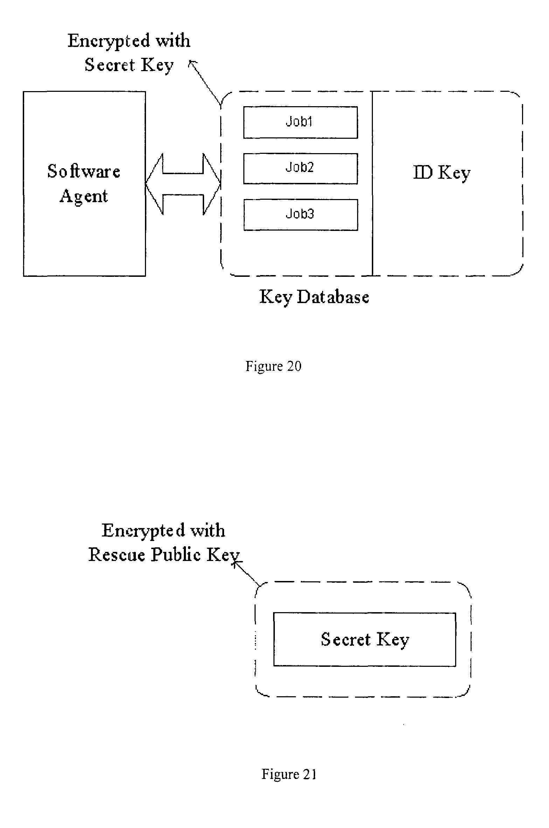

Figure 20 is a key database for software-based off-line printing;
Figure 21 is a key rescue file for software-based off-line printing;

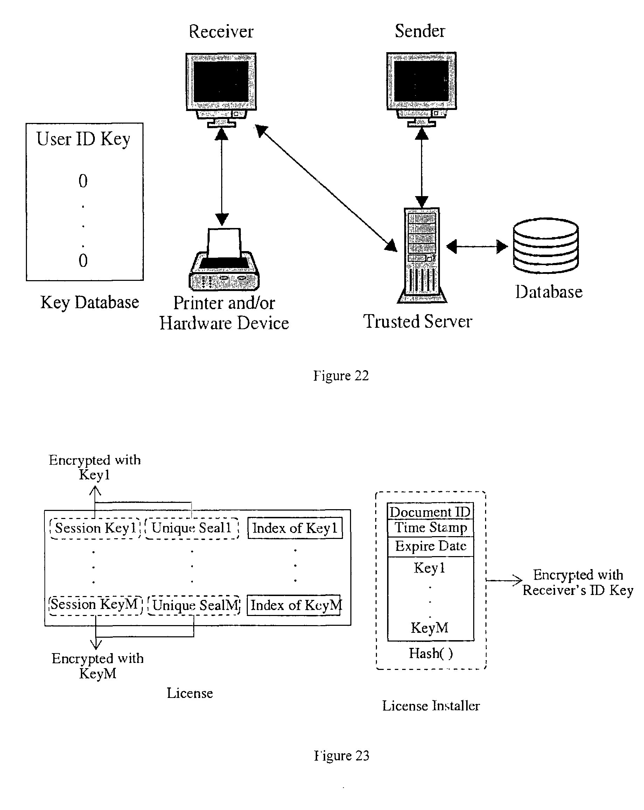

Figure 22 is a block diagram of the software-based off-line printing scheme;
Figure 23 is a license and license installer used in software-based off-line printing scheme; and

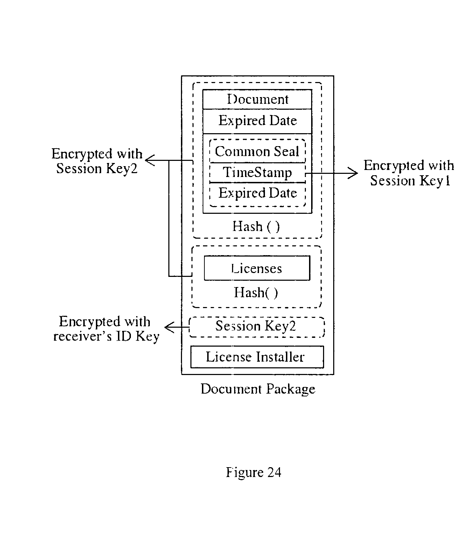

Figure 24 is a document data format used in the software-based off-line printing scheme.

### Description of Preferred Embodiment

The present invention has three major components: the overall document transfer and printing process where a server system plays a role of trusted third party, means to authenticate the printed document, and the printing control itself.

### Overall document transfer and printing process

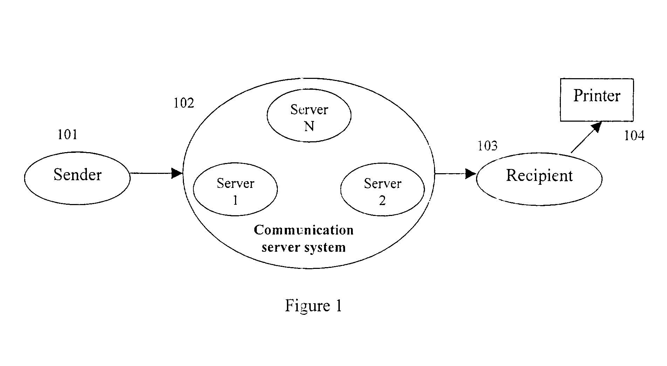

To refer to Figure 1, there are four major components in a secure remote document printing system. The sender of the document should be a person authorized to initiate the document. The communication server system consists of at least one server that provides the necessary facilities for secure and reliable document delivery. It acts as a trusted third party in authenticating the sender, and the recipient, the transaction is based on the internal public key infrastructure (PKI) protocol. It also acts as a trusted agent, on behalf of the sender, to enforce the sender's printing requirements, and to control the printing process. The printing process is controlled by the communication server system through software residing at the recipient's site. For secure document delivery using encryption technology, please refer to ISO/CCITT X.400, and for PGP, see, for example, Network Security - private communication in a public world, by C. Kaufman, R. Perlman, and M. Speciner, PTR Prentice Hall, 1995.

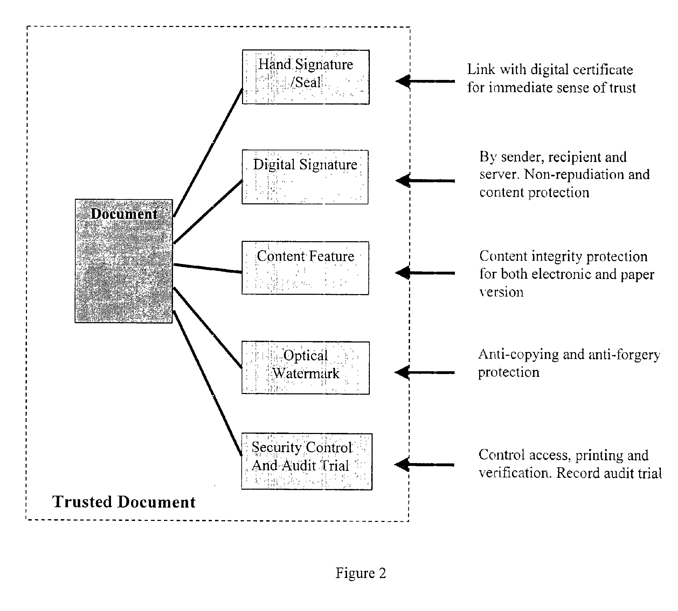

During the transfer of the document, the document will have a structure such as that shown in Figure 2, which will make it a trusted document. Together with the document itself, there are five other items to be included:
- the hand signature and/or seal of the issuing authority to give people an immediate feeling of trust. The hand signature and seal is added to the document only if the authentication of the authority is successful. In that way, the hand signature is meaningful;
- the digital signature of the document by the sender, recipient and the server system for no repudiation and content integrity. The digital signature is an encryption of the document hash with a private key. Digital signatures by all three parties will guarantee the no repudiation of origin, receipt, and delivery;
- an optical watermark on the document provides authentication of the document, and protects the document from copying and forgery;
- the content feature of the document is extracted from the whole document. It is used to verify the contents of the document, and to locate possible changes. It is stored in the server system for future document verification purposes;
- the usage control and audit trail record maintain the usage statement by the authority, and also determines the status of the execution of the copy controls. It is managed by the server system.

There are three choices of procedures, each having different levels of security:
a) High security procedure based on PKI. It provides a means for user authentication and no repudiation;
b) Secure delivery using Secure Socket Layer (SSL) protocol; and
c) Secure delivery using symmetric encryption.

### High security procedure based on PKI

### Registration

All users (senders and recipients) register with the service center, which runs the communication server system. The registration procedure includes, but may not to be limited to:
- the user asks to be registered, and provides their identification, user identity ("ID"), type of service requested, and a digital certificate obtained from a public certification authority (if available);
- the service center then verifies the user's credentials, creates a user profile and stores the user profile in its registration database. The service center then generates a registration identity and transfers the information as well as trusted client software to the user. If the user does not have a digital certificate, the internal certification authority will issue a digital certificate to the user by the following steps:
   - the internal certification authority generates a message authentication code ("MAC") key, and sends it to the user together with the client software and registration identity;
   - the user uses the client software to generate a key-pair, to generate a request for certification, encrypts it using the MAC key, and sends to the service center. The private key may be stored on the user's machine's hard disk, floppy disk, CDRom, smart card or any other suitable means;
   - the service center then verifies the request, and signs and returns the user certificate. At the same time, the service center deposits a copy of the user certificate in the certificate database; and
   - the service center prints the user certificate's fingerprint on hard copy, and both the service center and the registered user sign the hard copy.

### Sending a document

For a sender to send a document to a recipient, the following steps are undertaken :
- the sender logs on to the server system by providing their login ID, token (if any), and password;
- the server system verifies the sender identity and provides a prompt for the recipient's name, address, the document to be sent, and the number of copies allowed to be printed by the recipient if the verification is successful. If the recipient with the requested ID exists on the service centre database, the server system extracts the public key certificate from the certificate database, generates a unique serial number, and records the time of transaction. It is assumed that the time taken for entire process of the transaction can be ignored. If the recipient has not registered with the service center, the client software creates a session key, encrypts the data using the session key, encrypts the session key using a password, and sends the password by a separate email, telephone, or other means;
- the sender verifies the receiver's certificate, ID and the time of the transaction. The client software of the sender then computes the hash of the document to be sent, plus serial number, time, sender ID and recipient ID, signs these using the sender's private key, and sends it to the server system;
- the server system checks the signature's authenticity, and creates its own signature;
- the sender verifies the server system's signature, and incorporates it in the document;
- the client software of the sender adds to the document: a hand signature of the sender, a seal of the sender's company, and the content feature of the document; encrypts the content feature and hash using the server system's certificate, encrypts the rest of information and hash using the recipient's certificate, and uploads it to the server system; and
- on receiving the encrypted document, the server system stores it in the evidence database and sends the recipient a notification. The hash and content feature are stored in the server for a predetermined period for document authentication purpose.

### Receiving a document

Following the steps above:
- the server system advises the recipient of the availability of the document. A document ID and a serial number of the document is also sent;
- the recipient logs on to the server system with the recipient ID, token (if any), and password;
- the server system checks for validity, creates the hash of serial number, time, sender ID and recipient ID. It signs these and sends the signature as well as the hash to the receiver. The sender's certificate, the encrypted document, and the sender's signature are also sent with this information;
- the receiver then validates the sender's public key certificate, decrypts the document, generates the hash and crosschecks with the generated hash sent by the server system. If they match, the verification succeeds. The verification should also include the time of sending by the server system;
- the receiver's client software creates the signature of the hash of the document hash, serial number, recipient ID, and sender ID and time, and sends it to the server system. This will enable the service center to be fully convinced that the document has been successfully decrypted;
- the server system then verifies this information and stores the relevant information in the evidence database;
- when the recipient submits a request to print, the server system communicates with the printer at the recipient site via the client software and checks its status. If the printer is ready, the server system sends the document and the optical watermark for printing. Printing is successful if there is no error message. The server system creates an audit trial to record the entire process; and
- the server system sends an acknowledgement to the recipient, and notifies the sender.

### Secure delivery using SSL

SSL (Secure Sockets Layer) protocol, as described in Transport Layer Security, version 1, RFC2246, 1999, provides a secure channel between two parties. All data transfer through the SSL channel will be encrypted using a session key. The session key is randomly generated for each connection. The sending steps are:
- the sender establishes a connection with the server system and securely negotiates a SSL session key. All transactions below then pass through the encrypted channel;
- the sender logs on to the system with their login ID and password;
- the server verifies the sender identity through their login ID and password;
- the sender then submits a request to send data (which may be a document) to a recipient;
- the server acknowledges the request and prepares to receive the data;
- the sender sends the data together with the hash and content feature;
- on receiving the data, the server system stores it in the evidence database and sends the recipient a notification. The hash and content feature will be stored in the server for a predetermined period used for future authentication services;
- when the recipient receives the notification, with the client software they establish a connection with the server and negotiate a SSL session key. All of the following transactions pass through the encrypted channel;
- the recipient then logs on to the system with their login ID and password;
- the server verifies the recipient login ID and password. If verified, the server will deliver the data to the recipient;
- the recipient receives the data and sends an acknowledgement to server; and
- if the recipient submits a request to print an authenticated copy, the server will verify the document with the hash and content feature, communicate with the printer, and send the document as well as the optical watermark for printing. An audit trail is created to record the status of the entire process.

### Secure Delivery Using Encryption

- sender logs in to server with their login ID and password;
- server verifies the sender login ID and password;
- sender submits request to send data (which again may be a document);
- server acknowledges the request and prepares to receive the data from the sender;
- sender creates a hash and a content feature from the data, and generates a random session key to encrypt the data. The key and the hash are encrypted using a password, the hash and the content feature are encrypted using server system's public key, and then are uploaded to the server system;
- server system receives the encrypted data, key, hash and content feature, and stores them in the database;
- sender then informs the recipient through telephone, email, mail, personal delivery, or otherwise, of the password;
- when the recipient receives the password from the sender, the recipient logs in to the server with their login ID and password;
- server verifies the login ID and password. If verified, it will deliver the encrypted data, key and hash to the recipient;
- recipient receives the encrypted data, key and hash and sends and acknowledgement of receipt to the server;
- recipient decrypts the key and hash using the password obtained separately, and uses the key to decrypted the data;
- recipient computes the hash of the decrypted data and compares it with the received hash. If they are the same, another acknowledgement is sent to server; and
- if the recipient submits a request authority to print an authenticated document, the server system checks the database record of sender's definition to see if they are allowed to print the document, and how many copies they are allowed to print. If satisfactory, the server system verifies the document with the hash, communicates with the printer, and sends the document and the optical watermark for printing. An audit trail is created to record the status of the printing.

### Means for document authentication

Any suitable means can be used for document authentication. For example, special inks and special paper can be used in a controlled way. Another example is to use an optical watermark with multiple layers of embedded image objects. The optical watermark image is stored in the server system, and transferred to the printer for printing on the document in a way controlled by the server system. An optical watermark on a document provides the authenticity in a sense that there is no optical watermark on the document if the document is printed without permission from the server system, and hence the document is not authenticated. The optical watermark is disclosed in our co-pending PCT application number PCT/SG00/00147 entitled "Optical Watermark" filed in Singapore on 15 September 2000, a copy of which is filed herewith.

The optical watermark is to protect documents from counterfeiting and forgery. It embeds multiple latent image objects into layers of repetitive structures to generate a watermark. The watermark is then incorporated into a document as, for example, a seal, logo or background. This will be referred to as an "optical watermark".

The counterfeit-proof layer in the optical watermark is sensitive to the properties of the printer. Specifically, it depends on the size of the dots that are detectable by a photocopier. In order to guarantee the result of the printing of the optical watermark, a calibration process is necessary to determine the smallest visible dot size, and the best spatial frequency for its embedding. This process may include:
- generating an array of test patterns with different dot sizes;
- from the printed test page, the user locates the number of the first visible test pattern in order to find the smallest visible dot that the printer can print;
- based on this number, the system generates and prints an array of test patterns with different frequencies;
- from this printed page, the user determines the number of first invisible test pattern in order to find the frequency that can best hide the information;
- with the two numbers, a confirmation page is printed; and
- the user photocopies the confirmation page. If the anti-copy feature is seen, calibration is complete. Otherwise, the calibration is performed again until a successful result is obtained.

### Printing control

The printing control provides a controlling process to ensure that the document is printed strictly according to the authority/sender's instruction. That is, the authority/sender inputs their instruction on the printing when they send the document. The instruction is then implemented by the server system. As a trusted agent, the server system stores the instruction into the database as a part of document transfer history. The server system will control the printing process according to the instructions given by the sender. There are a number of ways in which the server system controls the printing process.

The existing printing process does not have any control. When the client gets the document from the server, it can be sent to a networked printer by a spool system. As soon as the printing request is in the queue of the spool, the link between the printing request and the client/server is severed. The only message is whether the printing request is successful or not. People can easily get hold of the data and require the printer to print multiple copies.

As the server system is trusted and secure, the server system communicates with the printer via client software. To ensure control of the printing process a number of methods may be used, which can include the recipient. The methods used will be different, and will be different again for an unsecured printer and/or non-secured recipient.

### Printing control with a secure printer

A secure printer will have a hardware unit that includes a clock; a secure memory to store the encryption key, programs for encryption and decryption, and for data; a CPU to execute programs, to communicate with the client and the server, and to control the printer. The hardware unit is secure in the sense that it prevents attacks from outside to the clock, to the key and program, and to the run-time program. When a user requests authority to print an authenticated copy, the server system communicates with the printer to complete the handshaking process via the client. After successful authentication of the printer and the server system based on public key pairs, the server system sends the encrypted hash and optical watermark with time stamp, as well as printing instructions, to the printer. For the details on security handshaking protocols and encrypted data transmission, refer to Chapter 9 "Security Handshaking Pitfalls", p223 in the book of "Network Security - private communication in a public world", by C. Kaufman, R. Perlman, and M. Speciner, PTR Prentice Hall, 1995.

The printer stores its private key in a secure memory. Its digital certificate is made known to the server system when the recipient is registered with the service center. After successfully completing the security handshaking process, the server system sends the encrypted instructions, document hash and optical watermark to the printer. All data is encrypted with a time stamp and digital signature. The printer receives the document from the client software, decrypts the data, verifies the digital signature and time stamp from the server, and prints it only if the verification is successful. The data is deleted immediately after printing. The printer creates hash of the printed data and signs the hash together with time stamp, and sends it to the server to be kept in the audit trail record.

With encryption technology and PKI, the communication between the server system and the printer is secure. The secure printer is manufactured and inspected by a trusted manufacturer to ensure that the program stored in the secure memory cannot be tampered with, and to prevent run-time attacks on programs running in the CPU of the printer.

### Printing Control with a trusted client

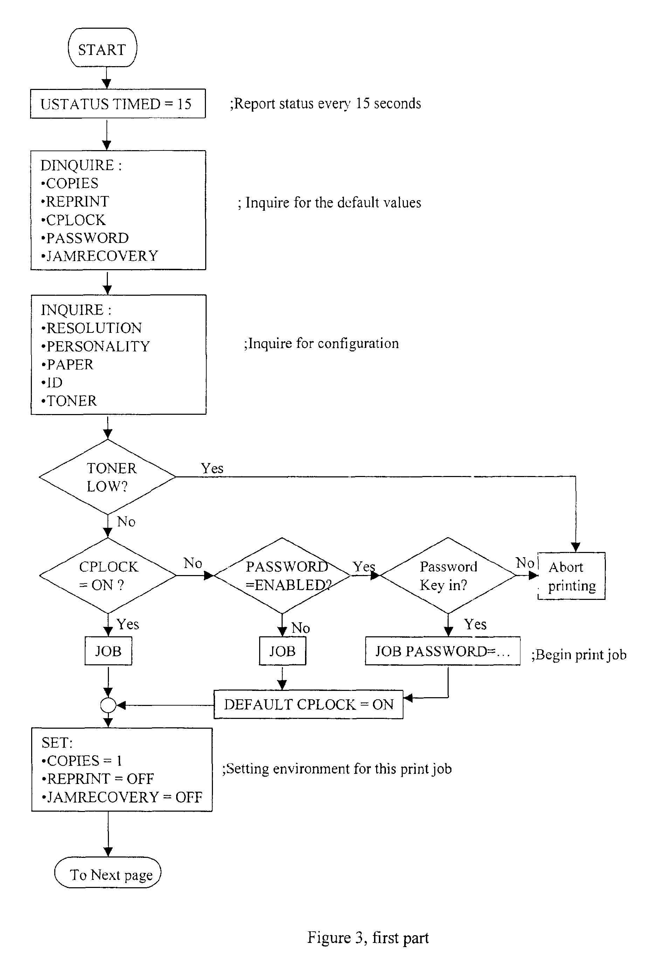

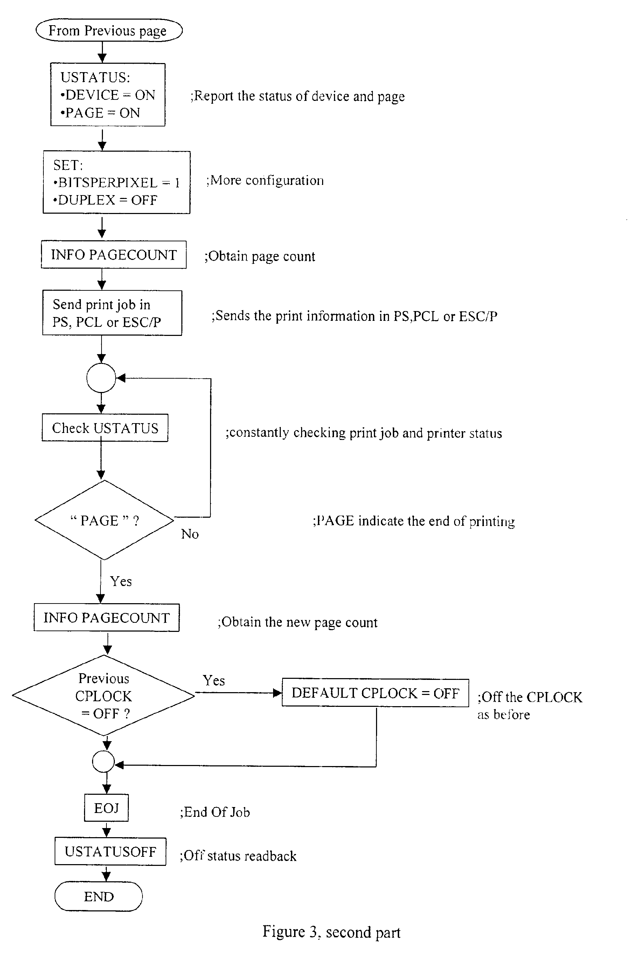

When the client is trusted, there should be no attack on the client software, or run-time attacks on the client software program. Through the client software, the server system communicates with the printer, checks its status, sends the printing instruction and data, monitors the whole process, and finally creates the audit trail record. The dialog with the printer uses available print task languages such as for example, PJL and PML by Hewlett Packard. Figure 3 is a flow diagram of printing control using PJL. The principal steps in the printing control process are:
- check and record the IP address and serial number of the printer;
- read the status of the printer, including the settings of the printer which are common to all print tasks, settings that are only valid to a specific print task, and the status of the printer at a fixed interval such as, for example, every 15 seconds;
- setting the values for all necessary settings required for the current printing task;
- locking of the control panel to prevent another user tampering with the settings while a print task is being sent to the printer. If the control panel is not able to be locked, the printing task is aborted; and
- sending of the print task using either PostScript (PS), Print Control Language (PCL), or Epson Standard Code for Printers (ESC/P).

The control program will first obtain all necessary information regarding the settings of the printer. With this information, undesired configurations or settings are reconfigured to desired settings. The printer is then set to report back the details of the device and page at a predetermined interval such as, for example, every 15 seconds. This is followed by the sending of the print task to the printer. With constant status reports, the printing process is closely monitored. If a genuine paper jam occurs, an error will be reported and a reprint can be performed. After printing is completed, the printer settings are reconfigured back to the original settings. All status reports will be captured for the audit trail.

The calibration process is not of necessity performed with manual intervention. That is, a calibration is carried out in the factory to compare visible dot size, and the toner level, and other printer parameters. With that data, and after the check of the printer status, a suitable printer setting is determined and set for the best performance of the optical watermark printed on the document.

### Printing control with non-secure client with non-secure printer

A non-secure client or non-trusted client may mean possible attacks to client software and hardware, as well as the printer. These include attacks to the software, run-time attacks to obtain the data, and to provide false information to the server. There are two approaches: one is to have client software as attack-free as possible, and the other is to introduce an extra hardware unit to protect the client software. The client software is divided into two parts when distributed, the basic part and the sensitive part. The sensitive part contains those sensitive codes and data, such as the watermark generating functions and access control. The basic part is distributed and installed when the user is registered.

The methods to protect the client software may include:
- Validating the basic client software for each printing.
   Any modification to the client software may cause the client software to malfunction. Such modification can be caused by network error, failure in user's hard disk, a virus, or attacking the software. To prevent this, a hash result of the basic client software is calculated and stored in the server before the software is delivered. When the user requests printing, the same hash function is calculated and the result is sent to the server for verification. The server sends the printing data to the client only when the hash result is identical to what was stored before. Otherwise, printing is not allowed and the user is prompted to take further action.
- Download sensitive codes upon request, or decrypting sensitive codes on the fly.
   The sensitive part can be kept in the trusted server, or delivered to the client in an encrypted format. When it is kept in the trusted server, it is downloaded to the client PC when required through a secure connection (e.g. SSL) by the basic part, and erased immediately after use. The sensitive part is kept small, or compressed to reduce the download time. The sensitive part can also be installed in the client's machine together with the basic part of the client software, but in encrypted form. When needed, the sensitive part is loaded into memory, decrypted, and executed. The server manages the decryption key. By doing this, static attacking, such as disassembling the code, is impossible.
- Obtain the sensitive part from the hardware.
   An attacker has virtually unlimited time to attack the client software, but attacking hardware is far more difficult. Therefore, the sensitive part can be obtained from the hardware during printing, and erased from memory immediately the printing process is completed. A very skilled attacker may be able to successfully attack the client software and print unlimited copies of document, but the copies will be noticeably invalid because there is no optical watermark for authentication.
- Detecting runtime attacks
   One of the runtime attack methods is to debug the program using a debugger.
   Searching through the system at runtime for a debugger is not adequate as some advanced debuggers are able to avoid detection. An effective method for detecting a runtime attack is calculating execution time for sensitive functions. The execution time will be noticeably slower than normal if it is debugged. A separate thread is created to monitor the execution time cf those sensitive functions. If the time is significantly longer than it should be, the main process will be terminated.

Another method of runtime attack is to monitor the system call activities using system hooking. While a system function call is being hooked, all its input and output data can be dumped, which may contain decrypted data or confidential information. To prevent this kind of attack, the client software will enumerate all system hooks and compare them with an internal blacklist. If a blacklisted hook is found, the client software will terminate running. The server will update the aforementioned blacklist constantly to deal with newly emerged hooking applications.

### Off-line printing control

When printing control is offline, all information required for printing the document is downloaded to the client's machine prior to printing. This preferably includes:
- the document itself;
- a seal that includes a hand signature and/or an image of a physical seal of the sender, and an optical watermark. The seal is further divided into two parts: one is the common seal which is common to all printed copies of the document; another is the unique seal, which is unique to each printed copy of the document; and
- usage control and audit trail.

This information is delivered in a specially designed and encrypted document package to ensure its security. As the server does not participate in the printing process, secure hardware/software is installed into the client system acting on behalf of the server. This therefore provides two solutions - a hardware solution, and a software solution. They may be used disjunctively or conjunctively, as desired.

### Hardware Solution

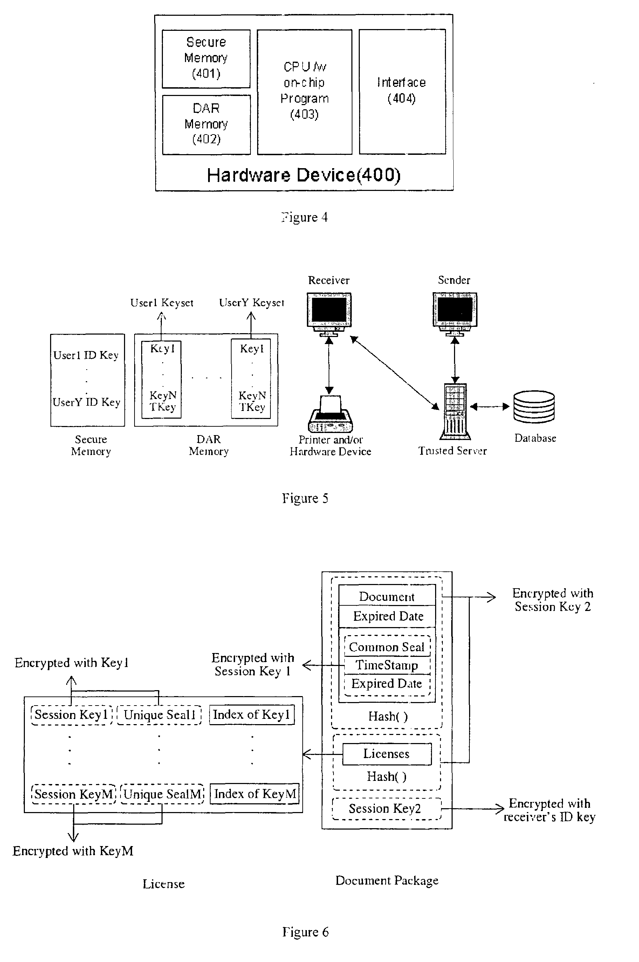

To refer to Figure 4, a secure hardware device is attached to the client's system, preferably integrated with the printer. The device preferably contains:
1. a secure memory (401), which is used to store important information. Different access rights are set by the CPU, and its on-chip program (403). For example, there can be two categories of memory:
   (a) memory that is accessible when a user password is entered and verified; and
   (b) memory that is strictly controlled for internal use. For example, secret keys, and/or serial numbers are stored in this memory. The serial number is preferably guaranteed to be unique by the hardware manufacture;
2. A DAR (Delete-After-Read) memory (402). Data in this memory is automatically deleted after it is read. This may be achieved by the on-chip program, or by the hardware. Important information, such as the printing license, is stored in this area;
3. CPU with on-chip program (403), which is capable of accessing the secure memory 401 and DAR memory 402, authenticating user requests, encryption, decryption, and creating digital signatures. The on-chip program also contains a key management system, preferably a file system. When a printing task arrives, a task identification number is sent to the hardware device, whereupon the key management system retrieves the corresponding key from the secure memory 401 or the DAR memory. The CPU may also contain a secure real- time clock to prevent time attacks; and
4. interface (404). It is responsible for setting-up communications between the hardware device and the host, as well as encrypting the data flow to prevent wire-tapping attacks.

The memory space in the hardware device, both the secure memory and the DAR memory, is divided into several blocks. A valid user can only access their block by providing the correct password. The device is designed to contain a certain number of blocks with initial passwords assigned for the access to each of those blocks being allocated during the manufacture of the memory chip(s). A unique user ID key is stored in the secure memory block for each receiver, and is recorded in the server's database. When using digital certificates, the user's private key can be stored in the secure memory block of the hardware device 400.

The hardware device 400 should be powerful enough to perform encryption/decryption operations, whether using its CPU, or the printer's CPU (if available).

The server is trusted and responsible to make the hardware available to users, and manage the keys and other aspects of the hardware devices.

The hardware device controls the printing by one of a number of schemes, two of which are exemplified below:

### Scheme 1:

This scheme uses symmetric encryption, e.g. 3DES, AES, BlowFish, etc. It consists of a sender, a receiver, a printing device, and a trusted server, as shown in Figure 5. The receiver's hardware device has a number of sets of random keys (Key1, ... KeyN, TKey) written in the DAR memory of their block. TKey represents a Top-Up Key. These keys are license keys and are used to encrypt unique seals. The Top-up Key (Tkey) is used in the top up process. A set of unique user ID keys and initial passwords corresponding to each key set is stored in the hardware device's secure memory. A copy of all these keys is also stored in the trusted server. The sender and receiver, as well as their hardware devices, have to be registered with the trusted server before using the secure printing process.

### Receiver's registration process

The receiver should register with the trusted server before receiving documents. The registering process may be:
1. the receiver requests registration at the server by providing their information such as user name, email address, as well as the ID of their hardware device;
2. the server processes the receiver's request. If approved, the server searches its database for an unused user ID of that hardware device. If all user IDs are used, a new hardware device should be installed;
3. the server records the user's information, and sends the initial password and user ID index to the receiver;
4. the client software is installed to the receiver's machine, if not already installed;
5. the receiver logs onto the client software by entering their user name, initial password and user ID index;
6. the user ID index and initial password are sent to the hardware device to activate its corresponding block for that user;
7. the receiver is prompted to change their password immediately, and the initial password is replaced by the new password; and
8. the client software prepares a private directory for the user and stores the key of that directory (referred to as the directory key) into the memory block of the user in the hardware device.

### License key top-up process.

As shown in Figures 6 to 8, when the user has used their license keys stored in the device, or there are insufficient licenses for a new request, the user will need to top-up their license keys using the following process:
1. when the server receives the sender's request to send M license keys for a document to a receiver, and the server finds that there are insufficient license keys for the receiver for that task, the server initiates the top up process; or
2. the receiver raises a request for a top-up of their license keys for a reason such as, for example, the receiver does not have enough keys, all the receiver's keys have been used, or the receiver wants to print more copies; then
3. the server processes the request. If approved, the server generates a new set of keys Key1' to KeyX' and a new top-up key (Tkey');
4. the new key set is encrypted with receiver's Tkey';
5. a hash is computed for the new key set and encrypted together with the new key set using receiver's ID key to form the top-up key set;
6. the top-up key set is sent to receiver together with the document package, or is sent separately;
7. after the receiver retrieves the data, the receiver sends the top-up key set to their hardware device;
8. the device decrypts the data with the receiver's ID key and computes the hash of the data for integrity checking;
9. if the data has no error, the device then reads in the Tkey' from the DAR memory to decrypt the key set;
10. the device then upgrades the key set in the DAR memory. The new key sets will not overwrite the unused keys, as its index number continues from the previously final key; and
11. the previous top-up key (Tkey) in DAR memory is replaced by the new top-up key Tkey'.

### For a sender to send documents to a receiver:

1. the sender connects to the trusted server through a secure link (e.g. SSL) using their user ID and password;
2. after successful authentication, the sender prepares their document by :
   a) encrypting the document or its hash result, common seal, timestamp for sending, and the document's expiry date, with the session key 1;
   b) a hash result is calculated for the document body, expiry date, and the outcome of step (a). The three parts are then encrypted with session key 2; and
   c) then sending the outcome of step (b), the receiver's ID, the session key 1, the session key 2 used for encryption, the number of license (e.g. M) for the receiver to print M copies of the document, and M unique seals, to the server. M may be zero to indicate viewing only;
3. the server validates the receiver's information, then selects M license keys (Key1 to KeyM) randomly or sequentially from the receiver's key set;
4. the M unique seals and session key 1 are encrypted with Key1 to KeyM separately to form M licenses. The hash field of the whole license pack is calculated to provide an integrity check for the license;
5. the server then creates a document package (Figure 6), which contains the sender-prepared document body (outcome of (b) in step 2 above), session key 2 encrypted with receiver's ID key, and the license. If the sender is not allowing the receiver to print the document, the license field will be empty. A top-up key set is also prepared if the receiver has insufficient license keys; and
6. the server sends a notice to the receiver advising them that the document package is ready for collection.

At any time before or after the receiver receives the notice in (6) above, the receiver can connect to the server. The receiver can then check whether there is any data for them. The procedure for the receiver to view and print the document is:
1. the receiver connects to the trusted server through a secure link (e.g. SSL) using their user name and password;
2. the server validates the user by issuing a challenge-response sequence:
   a) the server validates the user's name, then retrieves the user's ID key from the database;
   b) the server selects or generates a random number, encrypts it using the receiver's ID key, and sends it back to the receiver;
   c) the receiver's password is sent to the hardware device to gain access to their ID key;
   d) the hardware device decrypts the encrypted random number using ID key;
   e) the random number is sent back to the server; and
   f) the server authenticates the user by verifying the random number;
3. after successful authentication, the client software then downloads the data for the receiver from the server;
4. after receiving the data, the receiver can disconnect from the server or stay on-line;
5. the client software checks whether or not there is a top-up key set. If there is, the top-up key set is first sent to the device for the topping-up of the license keys;
6. the client software sends the encrypted session key 2 to the device for decryption. The session key 2 is decrypted and returned to the client software that then decrypts the document package and checks the hash fields in the document package. If the hash check fails, the receiver informs the server for resolution. The encrypted document or its hash, common seal, time stamp and expiry date, are not decrypted at this time; and
7. the document package is then re-encrypted and stored in the receiver's private directory using the directory key.

When the receiver wants to view the document, the following procedures are performed:
1. the receiver logs onto the client software with their user name and password and is authenticated by the hardware device;
2. after successful authentication, the client software reads the receiver's directory key and accesses the receiver's private directory for the document package;
3. the expiry date is compared with the internal clock in the hardware device. If the internal clock indicates that the expiry date has passed, the document has expired and viewing is not allowed; and
4. if the document has not expired, the receiver can view the document.

When the receiver wishes to print the document, the following procedures are performed:
1. the receiver logs onto the client software with their user name and password and is authenticated by the hardware device;
2. after successful authentication, the client software reads the receiver's directory key from the hardware device and accesses the receiver's private directory for the document package;
3. the client software sends an unused license to the hardware device for decrypting;
4. the hardware device reads a key from receiver's DAR memory according to the index and decrypts the session key 1 and the unique seal;
5. the document or its hash, common seal, timestamp and expiry date are sent to the device for decryption. The expiry date is compared with the clock in the device. If the internal clock indicates the expiry date has passed, the document has expired and no printing is allowed. If there is hardware failure in the device, the user should inform the hardware issuer to solve the problem;
6. the client software verifies the integrity of the document using the decrypted document hash from step 5 above and sends the document to the printer, or sends the decrypted document to the printer;
7. the client software communicates with the printer, monitors the printing status, and has the document printed with the proper seal on it;
8. audit trail information is generated and signed by the program inside the hardware device with receiver's ID key after each copy printed, which provides non-repudiation for each printed copy; and
9. the audit trail information is stored in the hardware and periodically uploaded to the server. The server maintains the audit trail for a predetermined period of time. After expiry of the predetermined period, it is deleted from the server.

### Scheme 2:

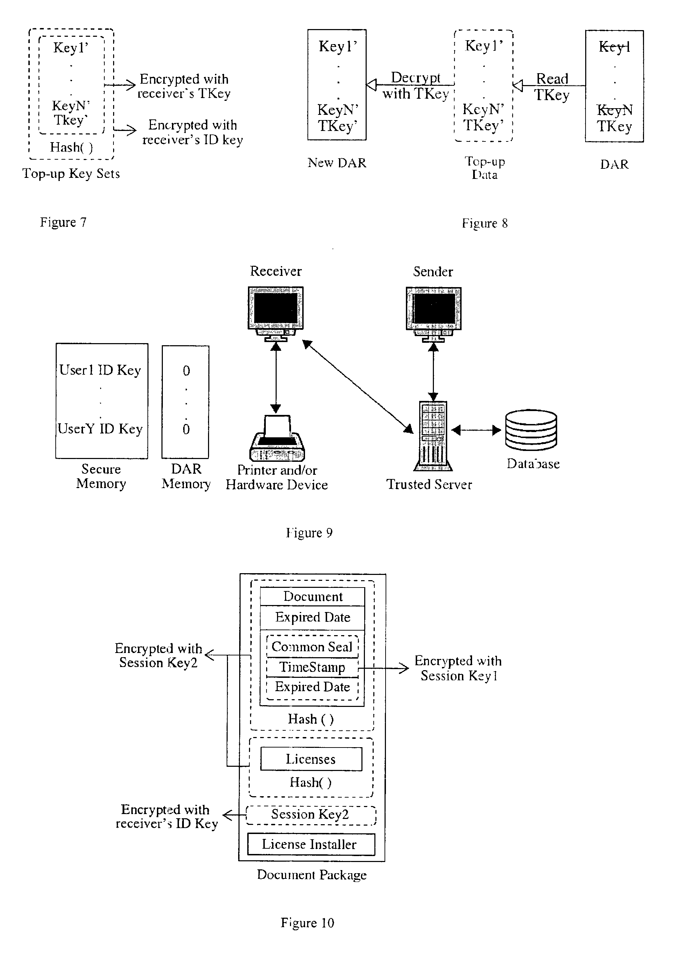

To refer to Figure 9, the DAR memory in the hardware device is kept empty (written with zeros) when it is manufactured. A copy of all necessary keys is also stored in the trusted server. All senders and receivers, and their hardware devices, have to be registered with the trusted server together before they can use the secure printing process.

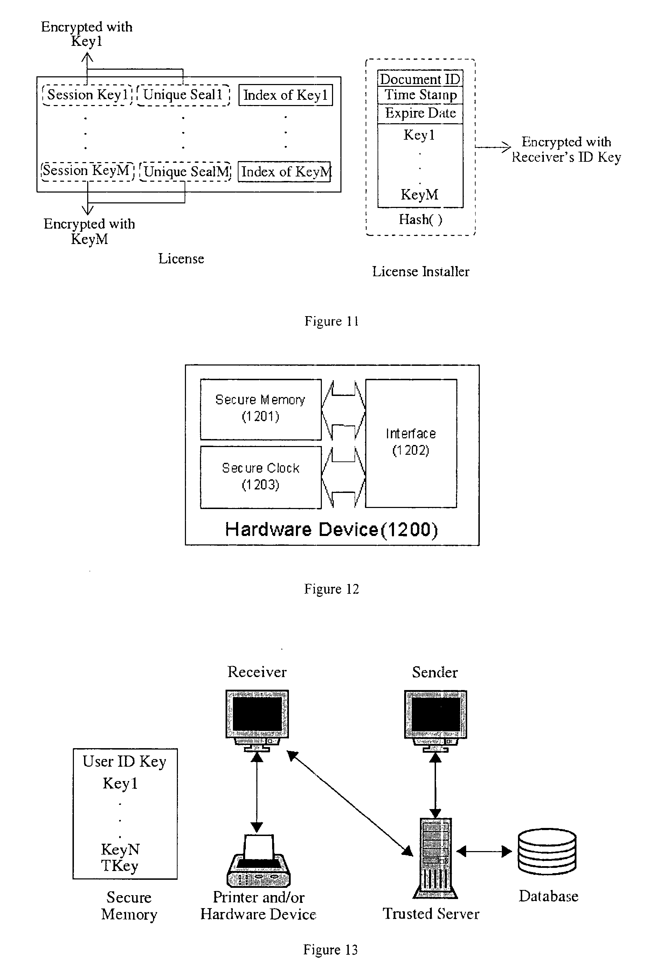

The receiver's registration process is the same as that mentioned in scheme 1 and includes:
1. the sender connects to the trusted server through a secure link (e.g. SSL) using their user ID and password;
2. after successful authentication, the sender prepares their document by:
   a) encrypting the document or its hash, common seal, timestamp for sending, and the document's expiry date with a session key 1;
   b) a hash result is calculated for the document body, expiry date, and the outcome of step (a). The three parts are then encrypted with a session key 2; and
   c) sends the outcome of step (b), the receiver's ID, the session key 1, the session key 2 used for encryption, the number of licenses (e.g. M) for the receiver to print M copies of the document, and M unique seals, to the server. M may be zero to indicate viewing only;
3. the server validates the receiver's information, and creates a licerse and license installer, as shown in Figure 11;
4. the license contains session key1, and M unique seals encrypted with M server generated random license keys Key1 to KeyM;
5. the license installer contains a unique ID for the document. It also contains a time-stamp (the time at which the license installer is created) and expiry date. The license installer is encrypted with receiver's ID key;
6. the hash of the license and license installer are also computed for integrity checking;
7. the server then creates a document package as shown in Figure10, which contains the sender prepared document package (outcome of (b) in step 2), session key 2 encrypted with receiver's ID key, the license, and the license installer. If sender intends that the recipient not be allowed to print the document, the fields for the of license and license installer will be empty; and
8. the server sends a notice to the recipient that the document is available for collection.

The recipient can connect to the server to check if there are any documents and/or data for them with or without having received any such notice. The procedure for the recipient to view and print the document is:
1. the recipient connects to the trusted server through a secure link (e.g. SSL) using their user name and password;
2. the server validates the recipient by issuing a challenge-response sequence:
   a) the server validates the recipient's name, then retrieves the recipient's ID key from the database;
   b) the server generates a random number, encrypts it using the recipient's ID key, and sends it to the recipient;
   c) the recipient's password is sent to the recipient's hardware device to gain access to their ID key;
   d) the recipient's hardware device decrypts the encrypted random number using the ID key;
   e) the random number is sent back to the server; and
   f) the server authenticates the user by verifying the random number;
3. after successful authentication, the recipient downloads the documents and/or data for them from the server;
4. after receiving the documents and/or data, the recipient can disconnect from the server or remain on-line;
5. the client software sends the license installer to the recipient's hardware device for installation;
6. the hardware device decrypts the license installer using the recipient's ID key and checks the integrity of the license installer by verifying the hash field. If the verification fails, the recipient advises the server to resolve the problem;
7. the device checks the document ID with the saved list of IDs;
8. if the ID is not found, the time stamp and expiry date are checked against the clock in the device;
9. upon all the checking procedures having been successfully completed, the license keys are installed in the receiver's DAR memory, and the ID is stored in ID list in the secure memory;
10. the client software sends the encrypted session key to the hardware device for decryption. The hardware device decrypts the session key 2 and returns it to the client software, which then decrypts the document package and checks the hash fields in the document package. If the check fails, the receiver informs the server for resolution. The encrypted document or its hash, common seal, time stamp, and expired data, are not decrypted at this time; and
11. the document package is then re-encrypted and stored in the receiver's private directory using the directory key.

The procedure for viewing the document is:
1. the receiver logs onto the client software with their user name and password and is authenticated by the hardware device;
2. after successful authentication, the client software reads the receiver's directory key and accesses the receiver's private directory for the document package;
3. the expiry date is compared with the clock in the hardware device. If the internal clock indicates the expiry date has passed, the document has expired and viewing is not allowed; and
4. if the document has not expired, the receiver can view it.

The procedure for printing the document is:
1. the receiver logs onto the client software with their user name and password and is authenticated by the hardware device;
2. after successful authentication, the client software reads the receiver's directory key and accesses the receiver's private directory for the document package;
3. the client software sends an unused license to the hardware device for decrypting;
4. the hardware device reads a key from receiver's DAR memory according to the index and decrypts the session key 1 and the unique seal;
5. the document or its hash, common seal, timestamp and expiry date are sent to the device for decryption. The expiry date is compared with the clock in the device. If the internal clock indicates the expiry date has passed, the document has expired and printing is not allowed. If there is hardware failure in the device the user will have to inform the hardware issuer of the problem and require them to solve the problem;
6. the client software verifies the integrity of the document using the decrypted document hash from step 5 above and sends the document to the printer, or sends the decrypted document to the printer;
7. the client software communicates with the printer, monitors the status of the printing process, and has the document printed with the proper seal on it;
8. audit trail information is generated and signed by the program inside the hardware device using the receiver's ID key after each copy is printed, which provides non-repudiation for the printed copy;
9. the hardware device checks the ID list periodically to remove the expired IDs; and.
10. the audit trail information is stored in the hardware devise and periodically been uploaded the server. The server maintains the audit trail for a predetermined period. It is deleted on expiry of the predetermined period.

If the CPU inside the hardware device is not sufficiently powerful to perform all encryption/decryption operations, or the interface speed is insufficient to meet printing requirements, the hardware device is used as a secure storage token in the printing process, as shown in Figure 12. The hardware device contains:
1. a secure memory (1201), which is used to store important information. The memory is accessible when a user password is entered and verified. A user ID key and/or serial number are stored in this memory. The serial number is preferably guaranteed to be unique by the hardware manufacture. When using digital certificates, the user's private key can be stored in the hardware device;
2. interface (1202) which is responsible for establishing communications between the hardware device and the host, as well as encrypting the data flow to prevent wire-tapping attacks; and
3. an optional hardware clock with backup battery (1203), to provide a time base when certain time-sensitive operations are needed.

As the hardware device is not as powerful as in the previous scheme, the license key installation and management process may be achieved by software on the client side, and may be protected by the anti-wire-tapping function of the interface.

The hardware device can be attached to the client machine via the machine's USB port, serial port or parallel port. A number of ready-made secure devices, such as smart card, USB key, or parallel port dongle, can be used as the hardware device. Each user has their own hardware device, which can be coupled to the user's machine when and as required, and removed after use.

The server is located at a trusted place. It can be at a location on the sender side for a sender centric model. Alternatively, it can be at the location of an independent trusted party. The manager of the server is responsible for the issuance of hardware devices to users, and for the management of the keys for the hardware devices.

The hardware device controls the printing by the following schemes:

### Scheme 1:

This scheme uses symmetric encryption, such as, for example.. 3DES, AES, BlowFish, etc. It may include the sender, receiver, printing device and a trusted server, as is shown in Figure 13.

The receiver's hardware device has a set of random keys (Key1, ..., KeyN, TKey) in the secure memory. The random keys are license keys and are used to encrypt the unique seal. The TKey (Top-up Key) is used in the top up process. A copy of all these keys is also stored in the trusted server. All senders and receivers, together with their hardware devices, have to registered with the trusted server before using the secure printing process.

The receiver's registration process is somewhat easier than that described above, and includes:
1. the receiver raises a request for registration at the server by providing their information such as, for example, user name, email address;
2. the server system customizes a hardware device for that receiver, which has a unique ID key, a series of license keys, and a top-up key in the secure memory. A copy of these keys is then recorded in the server's database. An initial password is also assigned to the device;
3. the device and the initial password are sent to the receiver separately, and the client software is installed onto the receiver's machine if it has not been previously installed;
4. the receiver logs onto the client software by entering their user name and initial password;
5. the initial password is sent to the hardware device for verification. If the password is correct, the receiver is prompted to change their password;
6. the initial password is replaced by the new password; and
7. the client software prepares a private directory for the user and stores the key of that directory (referred to as the directory key) in the secure memory of the hardware device.

### License key top-up process

When the device's random keys are all used, or there are insufficient for a new task, the device will need to top-up its random keys:
1. when the server receives the sender's request to send M license keys for a document to a receiver, the server checks the usage of receiver's license keys and, if required, initiates the top-up process; or
2. the receiver requests a top up of its license keys. For example, the receiver does not have sufficient keys, the receiver's keys have all been used, or the receiver needs to print more copies; then
3. the server processes the request. If approved, the server generates a new set of keys Key1' to KeyX', and a new top-up key Tkey';
4. the new key set is encrypted with receiver's Tkey;
5. a hash is computed for the new key set and encrypted, together with the encrypted new key set, using receiver's ID key to form the top-up key set;
6. the top-up key set is sent to receiver together with the document package, or may be sent separately;
7. after the receiver retrieves the document package, the receiver sends the top-up key set to the hardware device;
8. the hardware device decrypts the document package with its ID key and computes the hash of the data for integrity checking;
9. if there is no error, the hardware device then reads in the Tkey from the secure memory to decrypt the key set;
10. the hardware device then upgrades the key set in the secure memory. The new key set will not overwrite the unused keys as its index number continues from the previous last key; and
11. the top-up key (Tkey) in the secure memory is replaced by the new top-up key (Tkey').

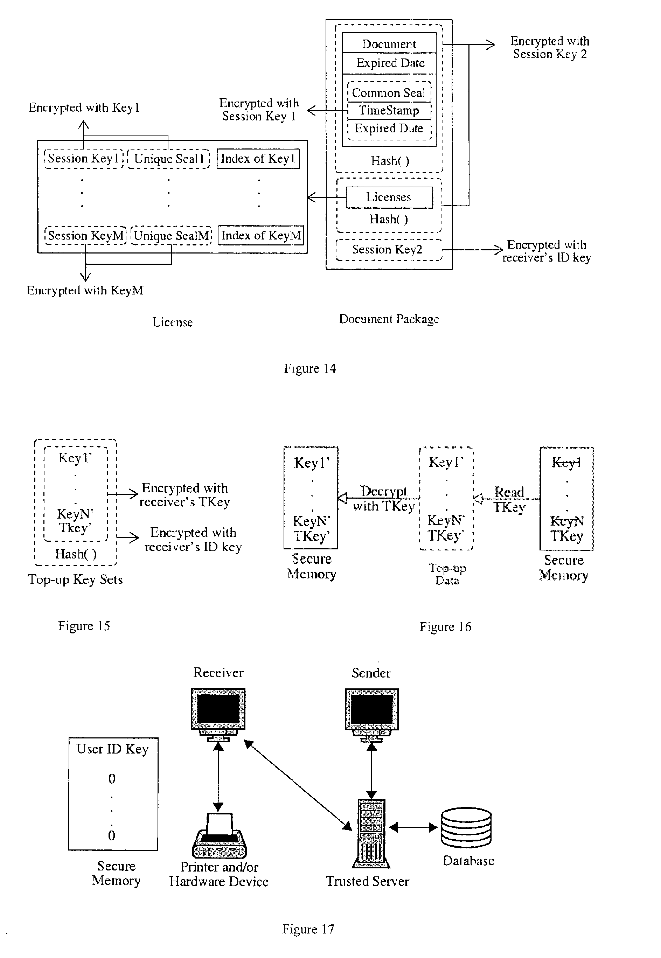

For a sender to send a document to a receiver:
1. the sender connects to the trusted server through a secure link (e.g. SSL) using their user ID and password;
2. after successful authentication, the sender prepares their document by:
   a) encrypting document or its hash, a common seal, timestamp for sending, and the document's expiry date with the session key 1;
   b) a hash result is calculated for the document body, expiry date, and the outcome of step (a). All three parts are then encrypted with the session key 2; and
   c) sends the outcome of step (b), the receiver's ID, the session key 1, the session key 2 used for encryption, the number of licenses (e.g. M) for the receiver to print M copies of the documents, and M unique seals, to the server. M may be zero to indicate viewing only;
3. the server validates the receiver's information, then select M license keys, Key1 to KeyM, randomly or sequentially, from the receiver's key set;
4. the M unique seals and session key 1 are encrypted with Key1 to KeyM respectively to form M licenses. A hash field of each is calculated to provide am integrity check for each license;
5. the server then creates a document package as shown in Figure 14, which contains the sender prepared document package (outcome of (b) in step 2), session key 2 encrypted with the receiver's ID key, and the license. If the sender is not allowing the receiver to print the documents, then the fields for the license and top-up key set will be empty. A top-up key set is prepared if the receiver has insufficient license keys; and
6. the server sends a notice to the receiver that the document is ready for collection.

Receiver can connect to the server to check if there is a data for them with or without having received a notice. The procedure for the receiver to view and print the document is:
1. the receiver connects to the trusted server through a secure link (e.g. SSL) using their user name and password;
2. the server validates the user by issuing a challenge-response sequence:
   a) the server validates the user's name, then retrieves the user's ID key from the database;
   b) the server regenerates a random number, encrypts it using receiver's ID key, and sends it to the receiver;
   c) the receiver's password is sent to the hardware device to gain access to the user's ID key;
   d) the hardware device decrypts the encrypted random number using the ID key;
   e) the random number is sent back to the server; and
   f) the server authenticates the user by verifying the random number;
3. after successful authentication, the client software downloads data for the receiver from the server;
4. after receiving the data, the receiver can disconnect from the server or stay on-line;
5. the client software checks whether there is a top-up key set and, if there is, the top-up key set is sent to the hardware device for a top-up; and
6. the client software sends the encrypted session key 2 to the hardware device for decryption. With the decrypted session key 2 returned from the hardware device, the client software decrypts the document passage and checks the hash fields in the document package. If the check fails, the receiver informs the server of the problem for the server to resolve the problem. The encrypted document or its hash, common seal, time stamp, and expiry date, are not decrypted at this time.

The document package is then stored in the receiver's private directory using the directory key.

For the receiver to view the document, the following procedure is required:
1. the receiver logs onto the client software with their user name and password and is authenticated by the hardware device;
2. after successful authentication, the client software reads the receiver's directory key from the device and accesses the receiver's private directory for the document package;
3. the expiry date and time stamp are compared with the clock in the hardware device. If the internal clock indicates the expiry date has passed, the document has expired and viewing is not allowed; and
4. if the document has not expired, the receiver can view it.
For the receiver to print the document, the following procedure is required:
1. the receiver logs onto the client software with their user name and password and is authenticated by the hardware device;
2. after successful authentication, the client software reads the receiver's directory key from the hardware device and accesses the receiver's private directory for the document package;
3. the client software selects a printing license. If no licenses are available, printing is not allowed;
4. the hardware device reads a license key from the secure memory and decrypts the session key 1 and the unique seal, and deletes the used license key;
5. the document or its hash, common seal, timestamp, and expiry date are decrypted using session key 1. The expiry date is compared with the clock in the device. If the internal clock indicates the expiry date has passed, the document has expired and printing is not allowed. If there is hardware failure in the device, the user informs the hardware issuer and request them to solve the problem;
6. the client software verifies the integrity of the document using the decrypted document hash from step 5 above and sends the document to the printer, or sends the decrypted document to the printer;
7. the client software communicates with the printer, monitors the printing status, and prints the document with a proper seal on it;
8. audit trail information is generated and signed with the receiver's ID key after each printed copy to provide non-repudiation for the printed a copy; and
9. the audit trail information is stored in the hardware device and periodically uploaded to the server. The server maintains the audit trail for a predetermined time. Upon the expiry of the predetermined time the audit trail information is deleted.

### Scheme 2:

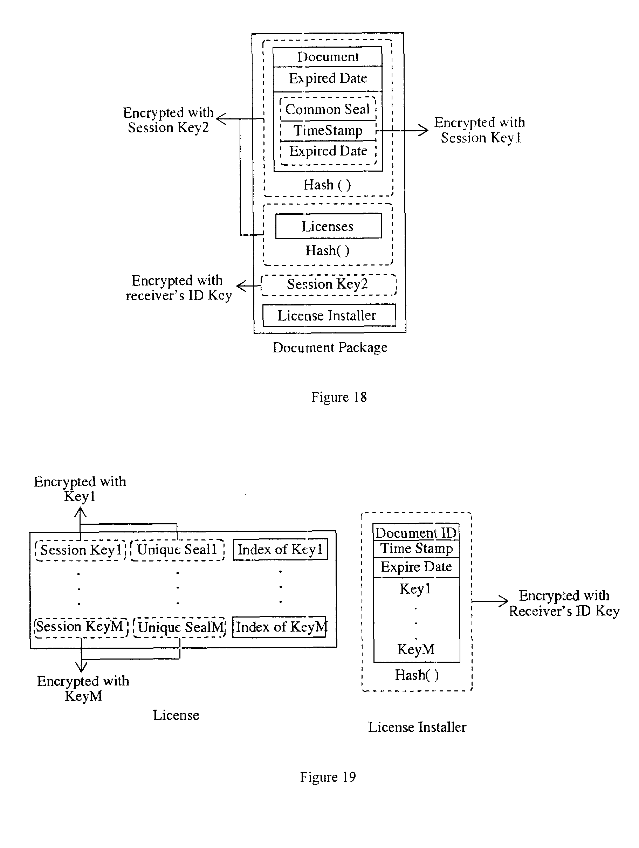

In this scheme, as shown in Figure 17, the secure memory in the hardware device is empty (written with zeros) when it is manufactured. All senders and receivers, together with their hardware devices, have to register with the trusted server before using the secure printing process of the present invention.
The receiver's registration process is somewhat easier than described above:
1. the receiver requests registration at the server by providing their information, such as user name and email address;
2. the server system customizes a hardware device for that receiver and which has a unique ID key written in the secure memory. A copy of the ID key is then recorded in the server's database. An initial password is also assigned for the hardware device;
3. the hardware device and the initial password are sent to the receiver separately, and client software is installed onto the receiver's machine;
4. the receiver logs onto the client software by entering their user name and initial password;
5. the initial password is sent to the hardware device for verification. If the password is correct, the receiver is prompted to change their password;
6. the initial password is replaced by the new password; and
7. the client software prepares a private directory for the user and stores the key to that directory (referred to as the directory key) into the secure memory of the hardware device.

The procedure a user follows to send a document is :
1. the sender connects to the trusted server through a secure link (e.g. SSL) using their user ID and password;
2. after successful authentication, the sender prepares their document by:
   a) encrypting the document or its hash, common seal, a timestamp for sending, and the document's expiry date, with the session key 1;
   b) a hash result is calculated for the document Body, expiry date, and the outcome of step (a). All three parts are then encrypted with session key 2; and
   c) sending the outcome of step (b), the receiver's ID, the session key 1, the session key 2 used for encryption, the number of licenses (e.g. M) for the receiver to print M copies of the document, and M unique seals, to the server. M may be zero to indicate viewing only;
3. the server validates the receiver's information, and creates a license and license installer, as shown in Figure 19;
4. the license contains session key1 and M unique seals encrypted with M server generated random license keys, Key1 to KeyM;
5. the license installer contains a unique ID for the document. It also contains a time-stamp (the time which license installer is created) and an expiry date. The license installer is encrypted with the receiver's ID key;
6. a hash of the license and license installer are also computed for integrity checking;
7. the server then creates a document package as shown in Figure 18, which contains the sender prepared document package (outcome of (b) in step 2), the session key 2 encrypted with receiver's ID key, and the license and the license installer. If the sender does not intend the receiver to print, the document the license and license installer fields will be empty; and
8. the server sends a notice to the receiver that the document is ready for collection.

The receiver can connect to the server to check if there are any documents for them with or without having received any such notice. The procedure for the receiver to view and print the document is:
1. the receiver connects to the trusted server through a secure link (e.g. SSL) using their user name and password;
2. the server validates the user by issuing a challenge-response sequence:
   a) the server validates the user's name, then retrieve the user's ID key from the database;
   b) the server generates a random number, encrypts it using the receiver's ID key, and sends it to the receiver;
   c) the receiver's password is sent to the hardware device to gain access to their ID key;
   d) the hardware device decrypts the encrypted random number using the ID key;
   e) the random number is sent back to the server; and
   f) the server authenticates the user by verifying the random number;
3. after successful authentication, the receiver then downloads the data for them from the server;
4. after receiving the data, the receiver can disconnect from the server or stay on-line;
5. the client software sends the license installer to the hardware device for installation;
6. the hardware device decrypts the license installer using the receiver's ID key, and checks the integrity of the license installer by verifying the hash field. If the checks fail, the receiver informs the server and asks the server to resolve the problem;
7. the hardware device checks the document ID with the list of saved IDs in the hardware device. If ID is not found, the time stamp and expiry date are checked against the clock in the device;
8. once all the checking has been successful, the license keys are installed in the secure memory, and the ID is stored in the ID list in the secure memory;
9. the client software sends the encrypted session key 2 to the hardware device for decryption. The hardware device decrypts the session key 2 and returns it to the client software, which then decrypts the document package, and checks the hash fields in the document package. If the check fails, the receiver informs the server and asks the server to resolve the problem. The encrypted document or its hash, common seal, time stamp, and expiry date are not decrypted at this time; and
10. the document package is then re-encrypted and stored in the receiver's private directory using the directory key.

The procedure for the receiver to view the document is :
1. the receiver logs onto the client software with their user name and password, and is authenticated by the hardware device;
2. after successful authentication, the client software reads the receiver's directory key and accesses the receiver's private directory for the document package;
3. the expiry date is compared with the clock in the hardware device. If the internal clock indicates the expiry date has passed, the document has expired and viewing is not allowed; and
4. if the document has not expired, the receiver can view it.

For the receiver to print the document:
1. the receiver logs onto the client software with their user name and password and authenticated by the hardware device;
2. after successful authentication, the client software reads the receiver's directory key and accesses the receiver's private directory for the document package;
3. the client software selects an unused printing license. If no printing licenses are available printing is not allowed;
4. if an unused printing license is available, the client software sends the license to the hardware device for decryption. The device reads a license key from the secure memory and decrypts the session key 1 and the unique seal;
5. the document or its hash, common seal, timestamp and expiry date are sent to the hardware device for decryption. The expiry date is compared with the clock in the device. If the internal clock indicates the expiry date has passed, the document has expired and printing is not allowed. If there is hardware failure in the device, the user informs the hardware issuer and asks them to solve the problem;
6. the device deletes the used license key;
7. the client software verifies the integrity of the document using the decrypted document hash from step 5 above and sends the document to the printer, or sends the decrypted document to the printer;
8. the client software communicates with the printer, monitors the printing status, and has the document printed with proper seal on the document;
9. audit trail information is generated and signed with the receiver's ID key after each copy is printed, which provides non-repudiation for the printed a copy;
10. client software checks the ID list in the device periodically to remove expired IDs; and
11. the audit trail information is stored in the hardware device and periodically uploaded to the server. The server maintains the audit trail information for a predetermined time upon the expiry of which the audit trail information is deleted.

### Off-line printing control - Software solution

In this situation, no additional hardware is needed for printing control. Instead, each receiver has a software agent installed, as shown in Figure 20.

The software agent is preferably protected using various techniques, such as anti-modification, anti-debug, and so forth. A series of keys for different printing licenses with their unique document ID, and a unique ID key, are stored in a key database (Figure 20) that is a file on the client's local hard disk. These keys are used internally by the software agent for cryptographic functions. The software agent also maintains a private directory for each user, which is protected by the user's ID key. When using digital certificates, the user ID key can be the user's private key.

The key database file is encrypted with a secret key. The software agent stores the secret key in a secure storage. For example, it may distribute the key in various locations throughout the hard disk, which makes successful attempts to recreate the key value by reverse engineering of the software agent extremely difficult.

Under a few conditions, incompatible disk utility may destroy the secure storage by accident. A rescue mechanism is introduced to address this problem. During the user's registration at the server, the server will generate a rescue key pair. The public key part of the key pair will be installed on the receiver's machine, while the private rescue key will be kept in server's database. The software agent will keep a copy of the secret key, which was encrypted by the rescue public key, as a rescue file (Figure 21). If the secret key is lost, the software agent will communicate with the server to recreate the secret key by using the rescue file.
Software based off-line printing control operates similarly to scheme 2 of the hardware based control, as is described above.

The sending procedure is:
1. the sender connects to the trusted server through a secure link (e.g. SSL) using their user name and password;
2. after successful authentication, the sender prepares their document by:
   a) encrypting the document or its hash, common seal, timestamp for sending, and the document's expiry date with session key 1;
   b) a hash result is calculated for the document body, expiry date, and the outcome of step (a). All three parts are then encrypted with the session key 2; and
   c) sending outcome of step (b), the receiver's ID, the session key 1, the session key 2 used for encryption, the number of license (e.g. M) for the receiver to print M copies of the documents, and M unique seals, to the server. M may be zero to indicate viewing only;
3. the server validates the receiver's information, and creates a license and license installer, as shown in Figure 23;
4. the license contains session key1 and M unique seals encrypted with M server generated random license keys, Key1 to KeyM;
5. the license installer contains a unique ID for the document. It also contains a time-stamp (the time which license installer is created) and an expiry date. The license installer is encrypted with the receiver's ID key;
6. a hash of the license and license installer are also computed for integrity checking;
7. the server then creates a document package, as shown in Figure 24, which contains the sender prepared document package (which is outcome of (b) in step 2), the session key 2 encrypted with the receiver's ID key, the license, and the license installer. If the sender has not authorised the receiver to print the document, the license and license installer fields will be empty; and
8. the server sends a notice to the receiver for that the document is ready for collection.

The receiver may connect to the server to check if there are any documents and/or data for them with or without having received such a notice. The procedure for the receiver to view and print the document is:
1. the receiver connects to the trusted server through a secure link (e.g. SSL) using their user name and password, and is authenticated by the software agent;
2. after successful authentication, the receiver downloads data for themselves from the server;
3. after receiving data, the receiver can disconnect from the server or stay on-line;
4. the client software sends the license installer to the software agent;
5. the software agent decrypts the license installer using the ID key, and checks its integrity. If the integrity check fails, the receiver should inform the server and ask the server to resolve the problem;
6. the software agent checks the document ID with the list of saved IDs in the key database;
7. if there is no match, the time stamp and expiry date are checked against the system clock. If the expiry date has passed, the license cannot be installed;
8. once all the checking has been successfully completed, the license keys are installed in the key database, and the ID is stored into the ID list; and
9. the client software sends the encrypted session key 2 to the software agent for decryption. The software agent returns the decrypted session key 2 to the client software which then decrypts the document and checks its integrity. If the integrity check fails, the receiver should inform the server and ask the server to resolve the problem. Otherwise, the document package is stored in the receiver's private directory.

The procedure for the receiver to view the document is:
1. the receiver logs onto the client software with their user name and password, and is authenticated by the software agent;
2. after successful authentication, the software agent accesses the receiver's private directory for the document package;
3. the expiry date is compared with the system clock. If the system clock indicates the expiry date has passed, the document has expired and viewing is not allowed; and
4. if the document has not expired, the receiver can view it.

For the receiver to print the document:
1. the receiver logs onto the client software with their user name and password, and is authenticated by the software agent;
2. after successful authentication, the software agent accesses the receiver's private directory for the document package;
3. the client software selects an unused printing license and sends it to the software agent. If no printing licenses remain, printing is not allowed;
4. if there is an unused printing license the software agent decrypts the session key 1 and unique seal from the license;
5. the document or its hash, common seal, timestamp, and expiry date are decrypted using the session key 1. The expiry date is compared with the system clock. If the system clock indicates the expiry date has passed, the document has expired and printing is not allowed;
6. the client software verifies the integrity of the document using the decrypted document hash from step 5 above and sends the document to the printer, or sends the decrypted document to the printer;
7. the client software communicates with the printer, monitors the status of the printing process, and has the document signed with the proper seal on it;
8. audit trail information is generated and signed with the receiver's ID key after each copy is printed to provide non-repudiation for the printed a copy;
9. the client software checks the ID list in the key database periodically to remove expired IDs;
10. the audit trail information is stored in the key database and periodically uploaded to the server. The server maintains the audit trail information for a predetermined time whereupon it is deleted;
11. the client software generates a new secret key and re-encrypts the key database; and
12. the client software creates a new key rescue file by encrypting the new secret key with rescue public key.

In above discussion, either a symmetrical key or public key may be used for convenience. In either case, both symmetrical and public keys are applicable. The predetermined period may be set by the user, the server, or by agreement between them.

Also, the sender and the server may be one. For example, an n issuing authority may be the sender and the server, in which case the server performs the functions of both.

As can be seen, the present invention relates to the remote printing of an authenticated document that may have been transmitted over a network. This will avoid costly and slow physical delivery of the authenticated paper document. There are certain areas where the present invention may have considerably advantageous application. One is the secure printing industry. They are a trusted and authorized agent. Authenticated documents, such as cash notes and bank checks, can be printed using special printers, special inks, special paper and other special materials. Both the printing process and printing materials are strictly controlled. The other is a signed document, where the authority initiates the document with their signature and/or seal. In both cases, the signature and special printing materials, which add authenticity to the document, are fully controlled by the authorized person or agent.

For example, if the sender and the server are one, the server could be a part of an issuing authority such as, for example, a postal authority, and the controlled printing could be of postage stamps. Another example is when the authority is a ticketing agency and the controlled printing is of tickets for an event such as a concert, sporting event, movies, or the like. In some countries, the Internal revenue service or its equivalent issues receipt numbers to those in business, and a formal receipt must issue for each payment received. This enables them to maintain a check on payments received by the business. The control of printing could be of the receipt numbers.

The present invention can also be used where the trusted printing or sending of a document is requires. This may include a tax invoice or receipt, in which case the following steps may be involved:
(a) the relevant government authority issues a secure hardware device to each business;
(b) the authority issues standard tax invoice and/or receipt forms and license keys to the businesses;
(c) the businesses use the hardware device to generate tax invoices and/or receipts that it then sends to its customers either electronically, or in hard copy. If sent electronically the hardware device controls the sending process in the same manner as it would for the printing of a hard copy,
(d) the hardware device creates audit trail information and records all necessary data including the amount of each receipt and invoice; and
(e) the audit trail information is sent to the authority when the license keys are topped up. On that basis the authority can determine the tax payable by each business based on the information received from the audit trails.

## Claims

1. A method for the remote printing of a document by use of a network, the method including the steps of:
(a) receiving at a server the document as sent from a sender;
(b) the server forwarding the document to a recipient;
(c) the document being authenticated prior to being forwarded to the recipient; **characterised in that**
(d) the server receives instructions from the sender regards printing controls and the server implementing those controls on the recipient.

2. A method for the remote printing a document by use of a network, the method including the steps of:
(d) a sender sending the document to a server to enable the server to forward the document to a recipient;
(e) the document being authenticated by the sender prior to sending it to the server; **characterised in that**
(f) the sender sends to the server instructions for controlling the printing of the document to enable the server to implement those controls on the recipient.

3. A method for printing of an authenticated document received remotely by use of a network. the method including the steps of a recipient receiving the authenticated document from a server, the server having received the authenticated document from a sender; **characterised in that** the server provides implementation of printing controls on the recipient, the server having received the printing controls from the sender.

4. A method as claimed in any one of claims 1 to 3, **characterised in that** the printing controls include the ensuring that the document as printed has a content that is exactly the same as the document content as sent by the sender.

5. A method as claimed in any one of claims 1 to 4, **characterised in that** the printing controls include one or more selected from the group consisting of: anti-forgery controls, anti-copying controls and controls on a number of copies of the document that are to be printed.

6. A method as claimed in any one of claims 1 to 5, **characterised in that** the recipient includes a printer, the server providing the printing controls to the printer for the printing of the document, and the server enables a secure document delivery from the sender through the server to the recipient.

7. A method as claimed in any one of claims 1 to 6, **characterised in that** the server is a trusted agent to the sender in printing control and is a trusted third party in document verification services, the server storing a hash of the document, and at least one content feature of the document, and uses them for document verification.

8. A method as claimed in claim 7, **characterised in that** secure document delivery and printing control is based on a trusted document structure including one or more from the group consisting of:
a) the document itself;
b) a hand signature;
c) a digital signature;
d) an optical watermark;
e) content features of the document;
f) usage control and audit trail;
g) a seal of the sender; and
h) an expiry date.

9. A method as claimed in claim 7 or claim 8, **characterised in that** the sender authorises the document.

10. A method as claimed in any one of claims 1 to 9, **characterised in that** the method uses a public key infrastructure to provide nonrepudiation, privacy and security in the delivery of the document.

11. A method as claimed in claim 8 or claim 9, **characterised in that** a digital signature is applied to the document, the digital signature being that of one or more selected from the group consisting of: the sender, the server, the recipient.

12. A method as claimed in any one of claims 1 to 11, **characterised in that** the sender is registered with the server before the sender can send the document, and the recipient is registered with the server before the recipient can receive the document.

13. A method as claimed in any one of claims 8 to 12, **characterised in that** a document hash and the content features are sent with the document for validation, and a hash and content feature of the document are kept in the server for future verification.

14. A method as claimed in any one of claims 1 to 8, **characterised in that** the method uses a secure document transfer channel provided by Secure Socket Layer protocol, and authentication of the sender and the recipient is by using user identity and at least one password.

15. A method as claimed in any one of claims 1 to 8, **characterised in that** the method uses encryption techniques for secure document delivery, a key to decrypt the document being sent directly to the recipient by a carrier means selected from the group consisting of email, telephone, mail, courier and personal delivery, and the document as printed is protected against unauthorised copying and forgery by using an authentication means selected from the group consisting of: optical watermark, special ink, special paper and special printing materials.

16. A method as claimed in claim 8, **characterised in that** the optical watermark has a counterfeit-proof layer, the printer being calibrated to achieve a high level of performance of the counterfeit-proof layer, the calibration being performed using a printing language without manual intervention, the printer being secure in the printing control process.

17. A method as claimed in claim 6, **characterised in that** the printer includes a secure memory, a secure central processing unit, and a secure clock, the secure memory being used to store a private key, the secure central processing unit being used to prevent run-time attacks; and the secure clock being used to keep time.

18. A method as claimed in claim 8, **characterised in that** the printer and the server system perform secure handshaking to authenticate each other, the printer and the server using one or more selected from the group consisting of a public key pair or the symmetry key of the printer, the server sending the encrypted document hash, an optical watermark, and printing instructions, to the printer and the printer receives the document through client software, decrypts the document, and verifies the document with a hash and time stamp before printing, and adds the optical watermark during printing.

19. A method as claimed in claim 17 or claim 18, **characterised in that** the document is deleted from the secure memory immediately after printing, and there an audit trail record is created in the server.

20. A method as claimed in any one of claims 1 to 17, **characterised in that** there is included client software that is downloaded to a machine of the recipient for the printing of the document, the recipient being trusted in the printing control process to minimise attack on the client software, the server communicating with the printer through the client software to verify the printer serial number and internet protocol address, check the status of the printer, locks a control panel of the printer, sets all necessary printer settings, sends to the printer the document and instructions for printing the document, and reset settings after the printing process is completed, and to create the audit trail record in the server.

21. A method as claimed in claim 8, **characterised in that** the seal includes one or more selected from the group consisting of: the hand signature and the seal; the seal including a common seal which is common to all printed copies, and a unique seal which is unique to each printed copy.

22. A method as claimed in claim 20, **characterised in that** the client software has a basic part and a sensitive part, the sensitive part being more susceptible to attack than the basic part; the basic part being sent to the recipient when the recipient is registered with the server; the sensitive part being downloaded to the recipient's machine for the printing of the document and is deleted from the recipient's machine upon the completion of the printing to protect the sensitive part from attack, an encrypted form of the sensitive part being sent to the recipient when the recipient is registered with the server, the server managing the decryption key; the sensitive part being decrypted when and as required, a hash result of the basic part being taken at the same time as or before the basic part is sent to the recipient, the hash result being stored in the server; and when the recipient requires printing of the document a second hash result of the basic part is taken and compared with the hash result before printing is authorized by the server.

23. A method as claimed in claim 20, **characterised in that** an execution time for the execution of components of the sensitive part is recorded in the server, and compared with the time taken for the execution of the components during the printing of the documents; the printing being terminated if the time taken is significantly longer than the execution time.

24. A method as claimed in any one of claims 1 to 23, **characterised in that** the printing controls are implemented in response to the recipient requesting the printing of the document.

25. A method as claimed in any one of claims 1 to 16, **characterised in that** the printing control is carried-out off-line, the server not participating in the printing process.

26. A method as claimed in claim 25, **characterised in that** there is provided a hardware device at the recipient to act on behalf of the server, the hardware device being for controlling the printing of the document, the hardware device including a secure memory, a delete-after-read memory, a central processing unit with an on-chip program, and an interface; the hardware device being registered with the server.

27. A method as claimed in claim 26, **characterised in that** the machine includes the printer, the hardware device being integral with the printer, the printer being registered with the server.

28. A method as claimed in claim 26, **characterised in that** the secure memory has an accessible memory that can be accessed only when a password of a user is entered and verified, the access being only to a block of the accessible memory relevant for that user; and a controlled memory for internal use, the controlled memory being divided into a plurality of blocks, there being one controlled memory block for each user, the controlled memory being for the storage of secret keys, serial numbers, user's private keys and the recipient's ID key.

29. A method as claimed as claimed in any one of claims 8 to 28, **characterised in that** the controls include the issuing of a license for the recipient to print the document, the license including a number of copies of the document authorized for printing, each license having a license key, the license key being used to encrypt the unique seal; the license keys being sent to the recipient by the server in an encrypted form and being installed in the hardware device.

30. A method as claimed in claim 29, **characterised in that** the server can add to the number of license keys, the server generating a new license key set and a new top-up key, the new license key set and the new top-up key being encrypted with the previous top-up key prior to being sent to the recipient by the server and being installed in the hardware device.

31. A method as claimed in claim 30, **characterised in that** each license includes an expiry date after which printing of the document using that license will no longer be possible, the new license key set being sent separately from the document.

32. A method as claimed in claim 30, **characterised in that** the new license key set is sent with the document.

33. A method as claimed in any one of claims 29 to 32, **characterised in that** prior to the sender sending the document, the sender's common seal, a timestamp for sending, and the expiry date, are encrypted with a first session key to give an encrypted result, and the encrypted result and the document are encrypted with a second session key to give a second encrypted result, a hash result being included in the second encrypted result to provide a means for checking data integrity.

34. A method as claimed in any one of claims 29 to 33, **characterised in that** the print controls can be to view the document but not to print the document, a license not being required for viewing.

35. A method as claimed in any one of claims 8 to 34, **characterised in that** the expiry date is checked before printing of the document is authorized and, if the expiry date has passed, printing of the document is not allowed.

36. A method as claimed in any one of claims 1 to 35, **characterised in that** the sender and the server are the same, all functions of the sender being performed by the server.

37. A method as claimed in claim 36, **characterised in that** the sender is an authority which issues a secure hardware device to each of a plurality of recipients, the document and license keys being sent to each of the recipients by a network, each recipient using the secure hardware device to print the document, the document being sent by the recipient to a customer of the recipient as a printed or electronic document, the secure hardware device controlling the sending of electronic documents, the secure hardware device creating an audit trail and sending it to the authority whenever new license keys are topped-up.

38. A method as claimed in claim 37, **characterised in that** the document is selected from the group consisting of: postage stamps, tax invoice, tax receipt, a value of each postage stamp, tax invoice, and tax receipt; a value of each being included in the audit trail, the authority determining tax payable based on the values included in the audit trail.

39. A method as claimed in any one of claims 25 to 38, **characterised in that** there is provided a secure software program to implement the printing controls at the recipient, the software program being implemented in a distributed manner to assist in preventing software attacks, the secure memory for the licence keys and audit trails also being implemented in a distributed manner.

40. A hardware device for use with a user's machine to enable control of printing of at least one document by the machine, the hardware device including a secure memory, a delete-after-read memory, a central processing unit with an on-chip program, and an interface.

41. A hardware device as claimed in claim 40, **characterised in that** the secure memory has an accessible memory that can be accessed only when a password of the user is entered and verified, the access being only to a block of the accessible memory relevant for the user; and a controlled memory divided into a plurality of blocks, there being one controlled memory block for each user, the controlled memory being for the storage of secret keys, serial numbers, user's private keys, and the user's ID key.

42. A hardware device as claimed in claim 40 or claim 41, **characterised in that** the hardware device is implemented as a secure software program, the software program being implemented in a distributed manner to assist in preventing software attacks.
